# EUROPÄISCHE PATENTSCHRIFT

(11) **EP 0 957 018 B1**
(45) Veröffentlichungstag und Bekanntmachung des Hinweises auf die Patenterteilung: **19.12.2001**
(21) Anmeldenummer: 99109010.1
(22) Anmeldetag: 06.05.1999
(51) Int. Cl.: B60T 17/02

(54) **Druckluftaufbereitungseinrichtung für Druckluftbeschaffungsanlagen auf Kraftfahrzeugen**
Pressure regulator for installation of compressed air production for vehicles
Régulateur de pression pour installations de production d'air comprimé dans de véhicules

(30) Priorität: 13.05.1998 DE 19821420
(43) Veröffentlichungstag der Anmeldung: 17.11.1999
(73) Patentinhaber: Haldex Brake Products GmbH, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- EP-A- 0 689 117
- DE-C- 19 649 498
- DE-C- 19 710 059

## Beschreibung

Die Erfindung betrifft eine Druckluftaufbereitungseinrichtung für Druckluftbeschaffungsanlagen von Kraftfahrzeugen mit den im Oberbegriff des Anspruches 1 angegebenen Merkmalen. Damit ist eine Baueinheit geschaffen, die in der Regel einen elektropneumatischen Druckregler, einen mechanisch-pneumatischen Druckregler, ein integriertes elektropneumatisch ausgebildetes Mehrkreisschutzventil und einen Lufttrockner aufweist. Die Elemente der Druckluftaufbereitungseinrichtung sind in einem gemeinsamen Gehäuse untergebracht, welches über einen Eingangsanschluß an den Kompressor einer Druckluftbeschaffungsanlage angeschlossen ist. Für die Durchführung der Leerlaufphase und der Regenerationsphase besitzt das Gehäuse einen in die Atmosphäre mündenden Ausgang.

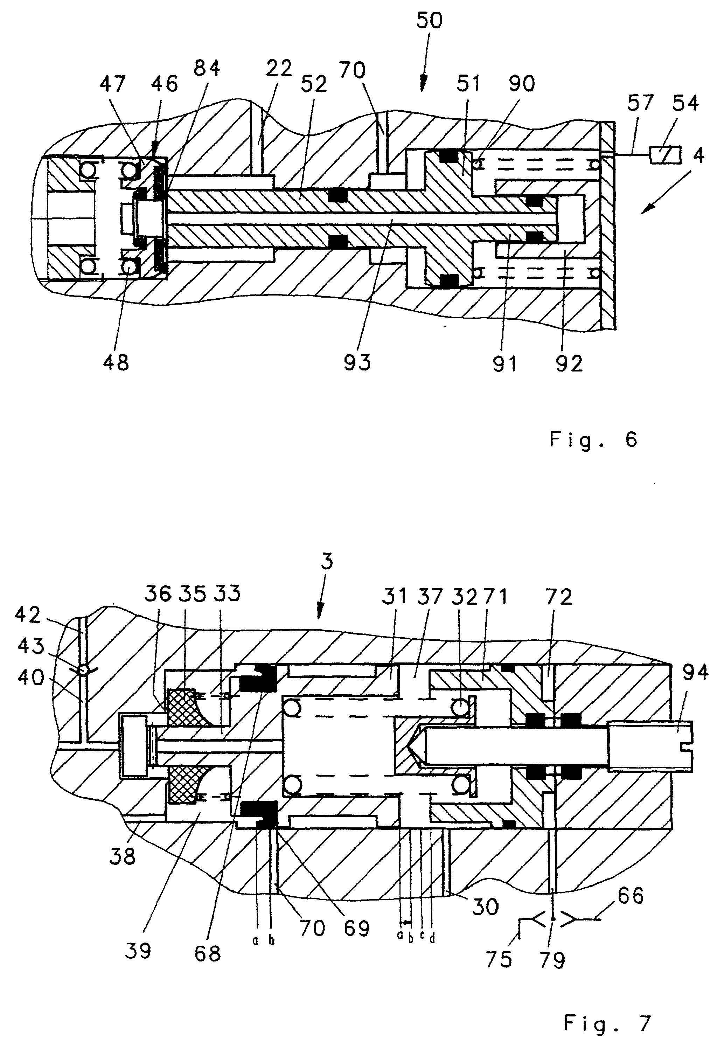

Eine Druckluftaufbereitungseinrichtung der eingangs beschriebenen Art ist aus der DE 196 49 498 C1 bekannt. Es ist eine Baueinheit aus einem elektropneumatischen Druckregler, einem integrierten mechanisch-pneumatischen Druckregler, einem integrierten elektropneumatisch ausgebildeten Mehrkreisschutzventil und einem Lufttrockner gebildet. Das gemeinsame Gehäuse weist einen Eingangsanschluß für die Verbindung zum Kompressor und einen Auslaß in die Atmosphäre auf. In dem gemeinsamen Gehäuse ist ein Durchtrittsraum für die herangeführte Druckluft vorgesehen, der über ein gesteuertes, als Sicherheitsventil ausgebildetes und zum Auslaß führendes Auslaßventil in dessen Offenstellung mit der Atmosphäre verbunden ist. Dem Durchtrittsraum ist ein Rückschlagventil nachgeschaltet. Es ist eine Einrichtung zum abwechselnden Öffnen und Schließen des Auslaßventils vorgesehen, die mehrere gleichartige und den einzelnen Kreisen zugeordnete Steuereinheiten aufweist, die je ein entgegen der Strömungsrichtung schließendes Rückschlagventil und je eine Betätigungseinheit zum gesteuerten Öffnen des jeweiligen Rückschlagventils besitzen. Zur Realisierung einer verbesserten Kreisbefüllung bei Spannungsausfall und zur Ermöglichung einer Regeneration des Trockners trotz Spannungsausfall ist in der Baueinheit zusätzlich zu dem elektropneumatischen Druckregler der mechanisch-pneumatische Druckregler integriert vorgesehen. Bei intakter Druckluftaufbereitungseinrichtung, also bei ordnungsgemäßer Spannungsversorgung, arbeitet die Druckluftaufbereitungseinrichtung über den elektropneumatisch ausgebildeten Druckregler. Der mechanisch-pneumatisch ausgebildete Druckregler spricht nicht an, weil dessen Abschaltdruck deutlich höher als der Abschaltdruck des elektropneumatisch ausgebildeten Druckreglers eingestellt ist. Der mechanisch-pneumatische Druckregler soll nur dann arbeiten, wenn tatsächlich auch ein Spannungsausfall vorliegt. Der mechanisch-pneumatische Druckregler kann zugleich als Schaltventil für die Einschaltung einer Regenerationsphase für den Lufttrockner nach Erreichen seines Abschaltdruckes ausgebildet sein. Diese Regenerationsphase wird nach Erreichen des Abschaltdruckes des mechanisch-pneumatischen Druckreglers eingenommen. Die den einzelnen Kreisen zugeordneten Steuereinheiten mit einer Betätigungseinheit zum gesteuerten Öffnen des Rückschlagventils aus Kolben mit Stößel sind in einer besonderen Ausführungsform (Fig. 7) auch über den mechanisch-pneumatischen Druckregler ansteuerbar, wobei die Steuerleitungen indirekt, also über die Räume der Magnetventile der elektropneumatischen Ansteuerung, zu den Wirkflächen der Kolben geführt sind. Dies ist mit entsprechenden Nachteilen verbunden. Der mechanisch-pneumatische Druckregler kann aber auch zugleich als Schaltventil für die Einschaltung der Regenerationsphase des Lufttrockners ausgebildet sein.

Aus der nachveröffentlichten DE 197 10 059 C1 ist eine Druckluftaufbereitungseinrichtung für Druckluftbeschaffungsanlagen von Kraftfahrzeugen bekannt, bei der ebenfalls zusätzlich zu dem elektropneumatischen Druckregler ein mechanisch-pneumatischer Druckregler integriert ist. Die Funktion dieses mechanisch-pneumatischen Druckreglers ist bei intakt mit Spannung versorgter Druckluftaufbereitungseinrichtung blockiert bzw. unterdrückt. Der mechanisch-pneumatische Druckregler übernimmt seine Funktion nur dann, wenn während der Fahrt entweder gewollt oder ungewollt eine Unterbrechung der Spannungsversorgung stattfindet, aber auch dann, wenn beim Abziehen des Zündschlüssels zum Zwecke des Stillsetzens des Fahrzeuges die Spannungsversorgung unterbrochen wird. Es schließt sich dann jeweils eine volle Leerlaufphase zur Durchführung einer Regeneration des Trockners an, damit der Trockner, insbesondere bei Stillsetzung des Fahrzeugs, möglichst vollständig entfeuchtet wird und daher auch bei tiefen Temperaturen im Winter nicht die Probleme des Frostschutzes bzw. des Einfrierens auftreten. Besonders vorteilhaft ist es, wenn die Schaltspanne des mechanisch-pneumatischen Druckreglers größer gewählt wird als die Schaltspanne des elektropneumatischen Druckreglers, so daß bei Spannungsunterbrechung eine besonders intensive und weitgehende Regenerationsphase abläuft. Diese Regenerationsphase kann sich nicht negativ auswirken, weil es bei abgestelltem Fahrzeug durchaus zulässig ist, den Behälterdruck infolge der vergrößerten Schaltspanne vergleichsweise weiter absinken zu lassen. Es kann dabei die Möglichkeit genutzt werden, den mechanisch-pneumatischen Druckregler zugleich als Schaltventil für die Einschaltung der Regenerationsphase auszubilden. Die Anordnung eines gesonderten Schaltventils ist nicht erforderlich. Die den mehreren einzelnen Kreisen zugeordneten Steuereinheiten können jedoch nur über den elektropneumatischen Druckregler angesteuert werden. Dies bedeutet, daß bei Spannungsausfall und Aufhebung der Blockierung der mechanisch-pneumatische Druckregler die Steuereinheiten nicht ansteuern kann und somit ein Nachfüllen der Kreise nur über die entsprechend ausgelegten Rückschlagventile möglich ist.

Der Erfindung liegt die Aufgabe zugrunde, eine Druckluftaufbereitungseinrichtung der eingangs beschriebenen Art bereitzustellen, die unabhängig von einer intakten oder gewollt oder ungewollt unterbrochenen Spannungsversorgung einen gleichen oder etwa gleichen Druckaufbau in den einzelnen Kreisen ermöglicht und so dem Fahrer unabhängig von der Spannungsversorgung oder Spannungsunterbrechung ein Fahrzeug mit im wesentlichen gleichen Fahreigenschaften zur Verfügung gestellt wird.

Erfindungsgemäß wird dies bei einer Druckluftaufbereitungseinrichtung der eingangs beschriebenen Art dadurch erreicht, daß der Abschaltdruck des mechanisch-pneumatischen Druckreglers gleich oder kleiner als der Abschaltdruck des elektropneumatischen Druckreglers ist, daß der mechanisch-pneumatische Druckregler bei intakt mit Spannung versorgter Druckluftaufbereitungseinrichtung in seiner Funktion blockiert ist, und daß die Steuereinheiten für die einzelnen Kreise auf direktem Wege wahlweise über den elektropneumatischen Druckregler oder den mechanisch-pneumatischen Druckregler ansteuerbar sind.

Die Erfindung geht von dem Gedanken aus, mit dem elektropneumatisch ausgebildeten Druckregler einerseits wie auch mit dem mechanisch-pneumatisch ausgebildeten Druckregler andererseits im wesentlichen gleiche Funktionen und Möglichkeiten zu erfüllen, damit z. B. das Abbremsen eines Fahrzeugs in gleicher Weise möglich ist, unabhängig davon, ob eine ordnungsgemäße Spannungsversorgung vorliegt oder die Spannung gewollt oder ungewollt unterbrochen ist. Hierzu können die beiden Druckregler mit ihren einzelnen Elementen entsprechend dimensioniert sein. Eine andere Möglichkeit besteht darin, den oder die Druckregler einstellbar auszubilden, damit die Abschaltdrücke in der gewünschten Relation zueinander festgelegt werden können. Der elektropneumatisch ausgebildete Druckregler soll aber immer Vorrang haben. Der mechanisch-pneumatische Druckregler erbringt nur dann seine Funktion, wenn die Spannung unterbrochen ist. Die den einzelnen Kreisen zugeordneten Steuereinheiten sind bei gleich hoch eingestellten Abschaltdrücken mit gleicher Auswirkung wahlweise einerseits über den elektropneumatischen Druckregler und andererseits über den mechanisch-pneumatischen Druckregler ansteuerbar, so daß die einzelnen Kreise in gleicher Weise befüllt bzw. nachgefüllt werden, unabhängig ob der eine oder der andere Druckregler gerade die Regelung übernimmt. Dies ist also dann der Fall, wenn der Abschaltdruck des mechanischen Druckreglers gleich hoch gewählt bzw. eingestellt ist wie der Abschaltdruck des elektropneumatischen Druckreglers.

Wenn dagegen der Abschaltdruck des mechanischen Druckreglers kleiner als der Abschaltdruck des elektropneumatischen Druckreglers gewählt ist, erfolgt die Befüllung und Nachfüllung der Kreise über den mechanisch-pneumatischen Druckregler mit entsprechend geringerem Druck. Dies kann als merkbares Signal für den Fahrer genutzt werden, den Defekt in der Spannungsversorgung zu beheben.

Die Ansteuerung auf direktem Wege sollte zwischen den Druckreglern und den Steuereinheiten bzw. Betätigungseinheiten zum Öffnen und Schließen der entgegen der Strömungsrichtung schließenden Rückschlagventile Signale benutzen, die völlig getrennt voneinander weitergeleitet werden. Die direkte, also unmittelbare, Ansteuerung der den einzelnen Kreisen zugeordneten Steuereinheiten über den mechanisch-pneumatischen Druckregler, also unter Umgehung von Elementen, über die die Ansteuerung durch den elektropneumatischen Druckregler erfolgt, hat verschiedene Vorteile. So wird eine gegenseitige Beeinflussung vermieden und Überlagerungserscheinungen treten nicht auf.

Die den einzelnen Kreisen zugeordneten Betätigungseinheiten können als Kolbeneinheiten mit Stößel zum Öffnen oder Entlasten des jeweiligen Rückschlagventils ausgebildet sein, wobei die Kolbeneinheiten zwei voneinander getrennte Wirkflächen aufweisen, von denen die eine Wirkfläche über den elektropneumatischen Druckregler und die andere Wirkfläche über den mechanisch-pneumatischen Druckregler ansteuerbar ist. Damit wird eine Vermischung der beiden Ansteuerkreise vermieden. Es tritt auch dann, wenn der mechanisch-pneumatische Druckregler die Ansteuerung übernimmt, ein tatsächliches Öffnen der Rückschlagventile auf, nicht nur eine Kraftentlastung. Bei Unterbrechung der Spannung stehen sämtliche Kreise miteinander in Verbindung, insbesondere auch solche Kreise, die keine Behälter aufweisen.

Die Kolbeneinheiten können zwei Kolben aufweisen, wobei beide Wirkflächen gleichsinnig auf die beiden Kolben verteilt angeordnet sind. Die eine Wirkfläche wird auch hier über den elektropneumatischen Druckregler angesteuert. Die andere Wirkfläche ist bei Spannungsunterbrechung über den mechanisch-pneumatisch ausgebildeten Druckregler ansteuerbar. Durch die Blockierung des mechanisch-pneumatischen Druckreglers bei ordnungsgemäßer Spannungsversorgung ist sichergestellt, daß immer nur die eine oder die andere Ansteuerung wirksam ist.

In einer anderen Ausführungsform können die Kolbeneinheiten lediglich einen Kolben aufweisen, der auf der einen Seite die eine Wirkfläche und auf der anderen Seite die andere Wirkfläche aufweist. Dabei ist der Ventilkörper des Rückschlagventils durchbrochen ausgebildet, und der Stößel der Kolbeneinheit bildet mit dem durchbrochenen Ventilkörper des Rückschlagventils ein Durchlaßventil, in dessen Offenstellung die Kreise miteinander in Verbindung stehen. Die Kolbeneinheit muß dann eine Schließfeder zum Schließen des Durchlaßventils aufweisen. Die Kraft dieser Schließfeder ist auf die Kraft der Feder des Rückschlagventils abgestimmt. Diese Schließfeder muß entsprechend dem pneumatischen Gegendruck auf die Wirkfläche des Stößels entsprechend kräftig dimensioniert sein.

Eine andere Möglichkeit besteht darin, die Kolbeneinheit druckentlastet auszubilden, wobei der Kolben auf der vom Stößel abgekehrten Seite einen in einer Hülse geführten Fortsatz aufweisen kann. Die durch den Fortsatz und die Hülse definierte Wirkfläche ist ständig vom Druck in dem jeweiligen Behälter beaufschlagt. Die Dimensionierung der Flächen ist entsprechend dem Grade der gewünschten Druckentlastung ausgebildet. Die Schließfeder kann dann vorteilhaft als sehr schwache Feder ausgebildet sein. Damit kann das Rückschlagventil seine normale Sicherheitsfunktion erfüllen bzw. entsprechend ausgelegt sein.

Wenn die Kolbeneinheiten zwei Kolben aufweisen und beide Wirkflächen gleichsinnig auf die beiden Kolben verteilt angeordnet sind, ist es sinnvoll, daß die Feder des gesteuerten Rückschlagventils in ihrer Kraft einstellbar ist. Über die eingestellte Feder wird der Sicherheitsdruck des Rückschlagventils in jedem Kreise eingestellt. Andererseits ist es auch möglich, die Druckbegrenzung für jeden einzelnen Kreis einzustellen. Die Einstellung kann in jedem Kreis auch unterschiedlich zu den anderen Kreisen erfolgen. Damit ergibt sich die Möglichkeit, gleiche Bauteile für die Steuereinheiten der einzelnen Kreise einzusetzen und trotzdem die einzelnen Kreise unterschiedlich einzustellen, beispielsweise auf unterschiedliche Vorratsdrücke in den einzelnen Kreisen.

Obwohl der mechanisch-pneumatische Druckregler nur bei Spannungsunterbrechung in Wirkfunktion tritt, sind seine Ausbildung und die durch ihn hervorgerufenen Möglichkeiten bedeutungsvoll, insbesondere für den Fall, daß durchaus gewollt eine Spannungsunterbrechung herbeigeführt wird, um andere Funktionen, als sie über den elektropneumatischen Druckregler möglich wären, zu eröffnen. So kann der Kolben des mechanisch-pneumatischen Druckreglers entgegen dem in seiner Kammer wirkenden Druck auf einer in einem Federraum angeordneten Feder abgestützt sein, deren anderes Ende auf einer gehäuseseitig abgestützten Stellschraube aufgelagert ist. Damit läßt sich insbesondere der Abschaltdruck des mechanisch-pneumatischen Druckreglers einstellen, und zwar entweder kleiner oder gleich zu dem Abschaltdruck des elektropneumatischen Druckreglers. Sofern dem Kolben des mechanisch-pneumatischen Druckreglers ein oder zwei Blockierkolben zugeordnet sind, die ebenfalls im Anschluß an den Federraum angeordnet sind, durchsetzt die Stellschraube den oder die Blockierkolben abgedichtet, so daß sich die in die Blockierkammern geschickten Drücke im Sinne einer Blockierung auswirken können.

Es ist eine zu den Betätigungseinheiten der Steuereinheiten führende Steuerleitung an den Federraum des mechanisch-pneumatischen Druckreglers über eine von einer Dichtung des Kolbens überfahrbare Bohrung angeschlossen. Die überfahrbare Bohrung an dem mechanisch-pneumatischen Druckregler ist außerhalb des Hubes des Kolbens zwischen Lastlauf und Leerlauf angeordnet. Bei steigendem Druck in der Kammer des Kolbens bei Erstbefüllung oder Freigabe der Blockierung des Kolbens des mechanisch-pneumatischen Druckreglers überfährt die Dichtung des Kolbens also zuerst die überfahrbare Bohrung und gelangt bei steigendem Druck und fortgesetztem Hub in den Bereich, in welchem sich der Hub zwischen Lastlaufphase und Leerlaufphase abspielt. Andererseits wird bei gleichzeitigem Auftreten von zwei Fehlern (Spannungsunterbrechung und Leck in einem Kreis) über den mechanisch-pneumatischen Druckregler so eine Sicherheitsfunktion erreicht. Durch das Überfahren der überfahrbaren Bohrung in umgekehrter Richtung werden die Wirkflächen der Betätigungseinheiten entlastet, so daß die gesteuerten Rückschlagventile schließen und die Kommunikation zwischen den einzelnen Kreisen aufgehoben wird, so daß die Druckluft in den intakten Kreisen genutzt werden kann.

Die Erfindung wird anhand bevorzugter Ausführungsbeispiele weiter erläutert und beschrieben. Es zeigen:
- Fig. 1: eine schematisierte Schnittdarstellung einer konstruktiven Ausführungsform der Druckluftaufbereitungseinrichtung,
- Fig. 2: ein schematisiertes Funktionsschaltbild der wesentlichen Elemente der Druckluftaufbereitungseinrichtung,
- Fig. 3: eine andere konstruktive Ausführungsform der Druckluftaufbereitungseinrichtung,
- Fig. 4: eine Ausführungsform des mechanisch-pneumatischen Druckreglers der Druckluftaufbereitungseinrichtung mit der Darstellung seiner Blockierung und der Ansteuerung der Steuereinheiten,
- Fig. 5: eine andere Ausführungsform des mechanisch-pneumatischen Druckreglers,
- Fig. 6: eine konstruktive Ausführungsmöglichkeit der Steuereinheit aus gesteuertem Rückschlagventil, Durchlaßventil und Betätigungseinheit, und
- Fig. 7: eine konstruktive Ausführungsform des mechanisch-pneumatischen Druckreglers.

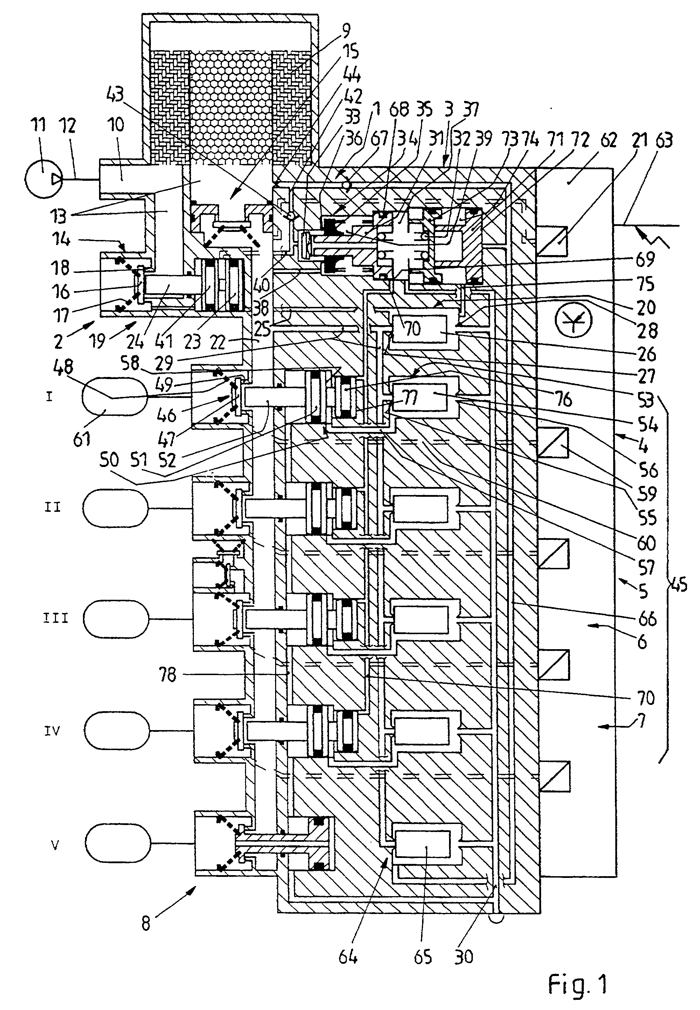

In Fig. 1 ist die Druckluftaufbereitungseinrichtung an einem ersten Ausführungsbeispiel erläutert. In einem gemeinsamen Gehäuse 1 ist ein elektropneumatischer Druckregler 2, ein rudimentärer mechanisch-pneumatischer Druckregler 3, Steuereinheiten 4, 5, 6, 7, 8 für einzelne Kreise sowie ein Lufttrockner 9 integriert vorgesehen. Am Gehäuse 1 ist ein Eingangsanschluß 10 vorgesehen, über den von einem Kompressor 11 über eine Leitung 12 gelieferte Druckluft der Druckluftaufbereitungseinrichtung zugeleitet wird. Mit dem Eingangsanschluß 10 steht ein Durchtrittsraum 13 in Verbindung, der einerseits zu einem gesteuerten Auslaßventil 14 und andererseits über den Lufttrockner 9 zu einem Rückschlagventil 15 führt. Das gesteuerte Auslaßventil 14 ist als Sicherheitsventil ausgebildet. Es besitzt ähnlich wie ein Rückschlagventil einen Ventilkörper 16, der auf einer einstellbaren Feder 17 abgestützt ist. Der Ventilkörper 16 arbeitet mit einem Gehäuserand 18 zusammen. Je nach der Einstellung der Feder 17 kann hier an dem Auslaßventil 14 ein Sicherheitsdruck eingestellt werden. Das Auslaßventil 14 führt in die Atmosphäre und verhindert, daß sich im Durchtrittsraum 13 ein höherer Druck als der eingestellte Sicherheitsdruck ausbilden kann. Funktionsmäßig gehört das Auslaßventil 14 sowohl zu dem elektropneumatischen Druckregler 2 wie auch zu dem mechanisch-pneumatischen Druckregler 3. Wenn man es baulich als Bestandteil des elektropneumatischen Druckreglers 2 ansieht, kann die funktionelle Integration des mechanisch-pneumatischen Druckreglers 3 als bauliche Integration des Schaltkolbens eines solchen mechanisch-pneumatischen Druckreglers 3 bezeichnet werden. Zu dem elektropneumatischen Druckregler 2 gehört ferner eine Einrichtung 19 zum abwechselnden Öffnen und Schließen des Auslaßventils 14. Weitere Bestandteile des elektropneumatischen Druckreglers 2 sind ein Magnetventil 20 und ein Drucksensor 21, der an einen Raum 22 nach dem Rückschlagventil 15 angeschlossen ist. Die Einrichtung 19 zum abwechselnden Öffnen und Schließen weist einen Kolben 23 und einen Stößel 24 auf, der zum Aufstoßen des Ventilkörpers 16 des Auslaßventiles 14 dient. Von dem Magnetventil 20 führt eine Leitung 25 zu der dem Kolben 23 zugeordneten Steuerkammer. Das Magnetventil 20 weist einen Ventilmagneten 26, einen Einlaßsitz 27 und einen Auslaßsitz 28 auf. Der Einlaßsitz 27 ist über eine Leitung 29 in dauernder Verbindung zu dem Raum 22. Der Auslaßsitz 28 hat Verbindung zu einer Entlüftungsleitung 30.

Der baulich rudimentäre mechanisch-pneumatische Druckregler 3 weist einen in einer Bohrung des Gehäuses mittels einer Dichtung geführten Kolben 31 auf, der auf einer Feder 32 abgestützt ist. Der Kolben 31 ist einstückig zu einer Schaltstange 33 verlängert, die ein Durchlaßventil 34 betätigt, welches von einem Doppelventilkörper 35 und einem gehäuseseitigen Rand 36 gebildet wird. Der Kolben 31 ist zu Zwecken der Entlüftung hohl ausgebildet. Der Federraum 37 ist ebenfalls an die Entlüftungsleitung 30 angeschlossen. Die Wirkfläche des Kolbens 31 steht über eine Leitung 38 in dauernder Verbindung zu dem Raum 22, so daß in der Kammer 39 der Druck des Raumes 22 herrscht. Jenseits des Durchlaßventiles 34 zweigt von dem mechanisch-pneumatischen Druckregler 3 eine Schaltleitung 40 ab, die zu der Wirkfläche eines weiteren Kolbens 41 führt, der gleichsam zu dem mechanisch-pneumatischen Druckregler 3 gehört. Die Kolben 23 und 41 liegen fliegend hintereinander und stützen sich aneinander ab. Der Kolben 41 trägt den Stößel 24. Die Kolben 23 und 41 könnten auch umgekehrt zugeordnet bzw. beaufschlagt sein.

Von der Schaltleitung 40 zweigt eine Rückströmleitung 42 ab, in der ein Rückschlagventil 43 und eine Drossel 44 angeordnet sind. Die Rückströmleitung 42 führt über den Trockner 9 zum Auslaßventil 14 und dient der Regeneration des Trockners 9.

Die Steuereinheiten 4, 5, 6, 7, 8 sind identisch oder ähnlich ausgebildet und bilden insgesamt das elektropneumatisch ausgebildete Mehrkreisschutzventil 45. Die Steuereinheiten 4, 5, 6 und 7 sind identisch ausgebildet und mögen den Kreisen I, II, III und IV zugeordnet sein. Der Einfachheit halber ist hier nur die Steuereinheit 4 mit ihren Einzelheiten beschrieben. Die Steuereinheit 4 weist ein Rückschlagventil 46 auf, welches einen Ventilkörper 47 besitzt, der auf einer einstellbaren Feder 48 abgestützt ist und mit einem Gehäuserand 49 zusammenarbeitet. Dem Rückschlagventil 46 ist eine Betätigungseinheit 50 zugeordnet, die einen Kolben 51 und einen Stößel 52 aufweist. Der Stößel 52 dient zur Betätigung des Rückschlagventils 46. Zu der Steuereinheit 4 gehört weiterhin noch ein Magnetventil 53 mit einem Ventilmagnet 54, einem Einlaßsitz 55 und einem Auslaßsitz 56, der ebenso wie der Auslaßsitz 28 des Magnetventils 20 an die Entlüftungsleitung 30 angeschlossen ist. Am Einlaßsitz 55 steht Druck über die Leitung 29 an. Vom Magnetventil 53 führt eine Leitung 57 zu der Wirkfläche 58 des Kolbens 51 der Betätigungseinheit 50. Zu der Steuereinheit 4 gehört schließlich noch ein Drucksensor 59, der über eine Leitung 60 den Druck nach dem Rückschlagventil 46 und damit in dem Behälter 61 des Kreises I mißt bzw. überwacht. Der Drucksensor 59 ist Bestandteil einer elektronischen Steuer- und Überwachungseinrichtung 62, die schematisch als integrierter Bestandteil der Druckluftaufbereitungseinrichtung angedeutet ist.

Die Steuereinheiten 5, 6, 7 des Mehrkreisschutzventils 45 sind identisch ausgebildet, angeordnet und angeschlossen, so daß hier auf die Beschreibung der Steuereinheit 4 verwiesen werden kann. Lediglich die Steuereinheit 8 ist nicht elektrisch vorgesteuert. Es ist hier ein Kreis V abgezweigt, dessen Aussteuerung rein mechanisch-pneumatisch verwirklicht ist.

Die Steuer- und Überwachungseinrichtung 62 wird mit elektrischer Spannung über die Leitung 63 versorgt.

Im Gehäuse 1 der Druckluftaufbereitungseinrichtung ist ein weiteres Magnetventil 64 mit Ventilmagnet 65 vorgesehen. Das Magnetventil 64 dient der Regeneration des Lufttrockners. Bei Erregung des Ventilmagneten 65 wird dessen Einlaßventil geöffnet und dessen Auslaßventil geschlossen, so daß Druckluft aus dem Raum 22 über die Leitung 29 und die Rückströmleitung 66, ein Rückschlagventil 67 und die Drossel 44 den Trockner 9 rückwärts in der Regenerationsphase durchströmen kann. Die Rückströmleitung 66 erfüllt ihre Funktion, wenn der elektropneumatische Druckregler 2 die Regenerationsphase aussteuert. Die Rückströmleitung 42 erfüllt ihre Funktion, wenn der mechanisch-pneumatische Druckregler 3 die Regenerationsphase aussteuert.

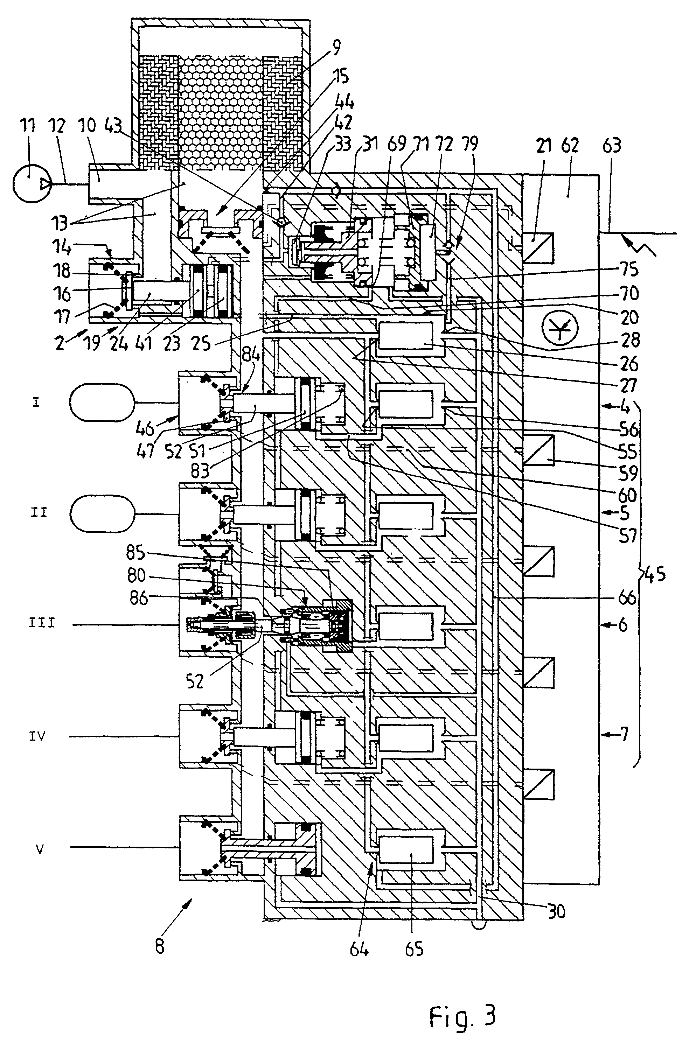

Der rudimentäre mechanisch-pneumatische Druckregler 3 weist einen Blockierkolben 71 mit Blockierkammer 72 auf. Die Blockierkammer 72 ist über das Magnetventil 64 und die Rückströmleitung 66 mit Druckluft aus dem Raum 22 nach dem Rückschlagventil 15 belüftbar, wenn der elektropneumatische Druckregler 2 die Regelung übernimmt und eine Regenerationphase eingeschaltet hat. Der rudimentäre mechanisch-pneumatische Druckregler 3 weist einen weiteren Blockierkolben 73 mit Blockierkammer 74 auf, auf dem sich die Feder 32 abstützt. Wenn der elektropneumatische Druckregler 2 die Regelung übernimmt und eine Lastlaufphase eingeschaltet hat, wird die Blockierkammer 74 über eine Leitung 75 belüftet und so der mechanisch-pneumatische Druckregler 3 blockiert. Die Blockierung im einen oder anderen Falle findet nur dann statt, wenn eine ordnungsgemäße Spannungsversorgung vorliegt. Mit dieser Belüftung wird die Feder 32 entweder auf Block zusammengeschoben oder aber ein Fortsatz des Blockierkolbens legt sich an den Kolben 31 des mechanisch-pneumatischen Druckreglers 3, so daß der Kolben 31 keine Bewegung ausführen kann bzw. keine Möglichkeit besteht, daß der Doppelventilkörper 35 in die Offenstellung übergeht. Der Federraum 37 ist an die Entlüftungsleitung 30 angeschlossen und somit dauerhaft entlüftet. Statt der Anordnung von zwei Blockierkolben 71 und 73 hintereinander besteht die Möglichkeit, einen Stufenkolben einzusetzen, dessen beide der Feder 32 abgekehrte Wirkflächen dann an die Blockierkammern 72 und 74 anschließen. Eine weitere Möglichkeit besteht darin, einen einzigen Blockierkolben 71 mit Blockierkammer 72 vorzusehen und der Blockierkammer 72 ein Zweiwegeventil 79 vorzuschalten (Fig. 3), an das einerseits die Rückströmleitung 66 und andererseits die Leitung 75 angeschlossen sind.

Die Druckluftaufbereitungseinrichtung gemäß Fig. 1 arbeitet bei intakter Anlage (ordnungsgemäße Spannungsversorgung) wie folgt. Der elektropneumatische Druckregler 2 übernimmt die Regelung der Leerlauf- und der Lastlaufphasen. Der mechanisch-pneumatische Druckregler 3 ist in seiner Funktion blockiert. Die Ventilkörper 47 der Rückschlagventile 46 der Steuereinheiten 4, 5, 6, 7 und 8 können mit Hilfe der einstellbaren Federn 48 gleich oder unterschiedlich eingestellt sein, je nach den gewünschten Vorratsdrücken in den Behältern 61 der Kreise I bis V. Der elektropneumatisch ausgebildete Druckregler 2 steuert über sein Auslaßventil 14, welches in der Lastlaufphase geschlossen ist, entsprechende Drücke in die Behälter 61 der Kreise ein, so daß diese aufgefüllt werden. Dabei werden auch die Magnetventile 53 der Steuereinheiten 4, 5, 6, 7 über die Steuer- und Überwachungseinrichtung 62 entsprechend betätigt und geschaltet. Über die Drucksensoren 59 der einzelnen Steuereinheiten kann das Erreichen der vorgesehenen Drücke überwacht und das jeweilige Magnetventil 53 umgeschaltet werden. Der Abschaltdruck des elektropneumatischen Druckreglers 2 wird über den Drucksensor 21 gemessen, so daß dann durch Öffnen des Auslaßventils 14 die Leerlaufphase des Druckreglers eingeleitet wird. Während dieser Druckerhöhung im Raum 22 wird der Kolben 31 des mechanisch-pneumatischen Druckreglers 3 sich gegen die Kraft der Feder 32 entsprechend dem sich aufbauenden Druck nicht bewegen, wobei der Ventilkörper 35 des Durchlaßventils 34 in Ruhe und damit das Durchlaßventil 34 geschlossen bleibt. Der mechanisch-pneumatische Druckregler 3 ist blockiert. In der Lastlaufphase ist das Magnetventil 64 erregt, so daß die Blockierkammer 72 über die Rückströmleitung 66 belüftet wird. Der Blockierkolben 71 verschiebt den Blockierkolben 73 und blockiert damit den Kolben 31. In der Leerlaufphase ist das Magnetventil 20 erregt, so daß die Blockierkammer 74 über die Leitung 75 belüftet wird. Der Blockierkolben 73 legt sich an den Kolben 31 und blockiert diesen. Der Abschaltdruck des mechanisch-pneumatischen Druckreglers 3 ist kleiner oder gleich hoch wie der Abschaltdruck des elektropneumatischen Druckreglers 2 eingestellt.

Tritt beispielsweise im Kreis I ein Leck auf, so daß hier eine Abströmung der Druckluft erfolgt, so wird dies der Drucksensor 59 der Steuereinheit 4 feststellen, so daß über die Steuer- und Überwachungseinrichtung 62 das Magnetventil 53 der Steuereinheit 4 nicht mehr geschaltet wird. Es verbleibt in der geschlossenen dargestellten Stellung gemäß Fig. 1. Je nach der Größe des Lecks wird das Rückschlagventil 46 der Steuereinheit 4 in eine entsprechende Stellung gehen. In diesem Defektfall können in den Behältern 61 der Kreise II bis V Vorratsdrücke realisiert werden, die dem eingestellten Öffnungsdruck des Rückschlagventils 46 des Kreises I entsprechen.

Fällt dagegen die elektrische Versorgung der Steuer- und Überwachungseinrichtung 62 aus oder tritt ein Defekt in der Elektrik ein oder wird gewollt eine Spannungsunterbrechung herbeigeführt, so wird die gesamte elektrische Steuerung funktionslos oder funktionslos gemacht, und es übernimmt der auf einen vergleichsweise gleichen oder kleineren Abschaltdruck eingestellte mechanisch-pneumatische Druckregler 3 bzw. dessen rudimentäre Teile zusammen mit dem Auslaßventil 14 des elektropneumatischen Druckreglers 2 die Umschaltung von der Lastlaufphase in die Leerlaufphase und umgekehrt. Die Blockierung des Kolbens 31 ist aufgehoben, weil sämtliche Magnetventile stromlos sind und somit beide Blockierkolben 72 und 74 entlüftet sind. Es versteht sich, daß in diesem Defektfall des Spannungsausfalls kein Leck in einem der Kreise vorhanden ist, weil das gleichzeitige Auftreten zweier Fehler als unwahrscheinlich angesehen wird. Es wird sich bei Spannungsausfall im Raum 22 entsprechend dem Abschaltdruck des mechanisch-pneumatischen Druckreglers 3 ein entsprechender Druck aufbauen, der auch auf die Wirkfläche des Kolbens 31 einwirkt, so daß nunmehr der Kolben 31 einen Hub zurücklegt, wobei sich das verdickte Ende der Schaltstange 33 an den Ventilkörper 35 des Durchlaßventils 34 legt. Mit dem Erreichen des Abschaltdruckes wird der Ventilkörper 35 von dem Rand 36 abgehoben und so die Leerlaufphase eingeleitet. Über die Schaltleitung 40 wird einerseits das Auslaßventil 14 geöffnet und andererseits die Regenerationsphase des Druckreglers über die Rückströmleitung 42 eingeleitet. Man erkennt, daß selbst in diesem Defektfall eine Regeneration des Trockners 9 erreicht wird.

Wie Fig. 1 zeigt besitzt der mechanisch-pneumatische Druckregler 3 in seiner Gehäusewandung in relativer Zuordnung zu einer insbesondere als Lippe ausgebildeten Dichtung 68 des Kolbens 31 eine überfahrbare Bohrung 69, von der eine Steuerleitung 70 ausgeht, die zu den Steuereinheiten 4, 5, 6 und 7 führt. Der Hub der Dichtung 68 des Kolbens 31 des mechanisch-pneumatischen Druckreglers 3 relativ zu der überfahrbaren Bohrung 69 ist kleiner als der Schalthub, den der Kolben 31 und mit ihm die Schaltstange 33 zurücklegen muß, um das Durchlaßventil 34 zu öffnen. Diese Abstimmung zielt darauf ab, in der Steuerleitung 70 vor Erreichen des Abschaltdruckes des mechanisch-pneumatischen Druckreglers 3 einen Steuerimpuls zu erhalten, also Druckluft aus dem Raum 22 in die Steuerleitung 70 zu schicken. Die Bedeutung dieses Steuerimpulses wird später erläutert werden.

Fig. 1 zeigt auch eine Weiterbildung der Steuereinheiten 4, 5, 6 und 7. Die Betätigungseinheit 50 weist hier neben dem Kolben 51 noch einen zweiten Kolben 76 auf, die ähnlich wie die Kolben 23 und 41 hintereinander angeordnet sind und sich aneinander abstützen. Die beiden Kolben 51 und 76 können gleiche oder ungleiche Durchmesser bzw. Wirkflächen aufweisen. Während der Kolben 51 über die Leitung 57 von dem Magnetventil 53 belüftbar ist, führt die Leitung 70 zu der Wirkfläche 77 des Kolbens 76. Dies erbringt die Möglichkeit, das Rückschlagventil 46 durch Belüftung der Wirkfläche 77 des Kolbens 76 über die Leitung 70 zu erreichen, wenn bei Spannungsausfall oder Spannungsunterbrechung der mechanisch-pneumatische Druckregler 3 die Regelung übernehmen soll. Damit wird es möglich, in den Behältern 61 der Kreise I bis V einen Vorratsdruck entsprechend der Ausbildung und Einstellung des mechanisch-pneumatischen Druckreglers 3 in diesem Defektfall aufrechtzuerhalten. Die Leitung 70 führt weiter auch zu den Betätigungseinheiten 50 der übrigen Kreise II, III und IV. Eine Leitung 78 ist zu Entlüftungszwecken vorgesehen.

Wenn die Kolben 51 und 76 gleiche Durchmesser und Wirkflächen haben, werden die Rückschlagventile 46 auch bei Regelung durch den mechanisch-pneumatischen Druckregler 3 aufgestoßen, d.h. die einzelnen Kreise stehen untereinander in Verbindung.

Fig. 1 zeigt jedoch den vergleichsweise kleiner gestalteten Kolben 76, so daß seine Wirkfläche 77 kleiner als die Wirkfläche 58 des Kolbens 51 ist. Dies bedeutet, daß der in der Steuerleitung 70 zu gegebener Zeit wirksame Impuls nur in der Lage ist, eine vergleichsweise verminderte Kraft auf den Ventilkörper 47 des Rückschlagventils 46 zu übertragen. Diese verminderte Kraft ist kleiner als die an der Feder 48 eingestellte Öffnungskraft, so daß das Rückschlagventil 46 bei einer solchen kraftmäßigen Beaufschlagung nicht geöffnet, jedoch vorteilhaft kraftentlastet wird. Das Ventilglied 47 befindet sich damit weiterhin in der Schließstellung, kann jedoch infolge eines vergleichsweise niedrigeren Druckes im Raum 22 kurzzeitig geöffnet werden. Das Rückschlagventil 46 öffnet und schließt also vergleichsweise früher. Auf diese Weise kann eine Druckbegrenzung des Druckes im Behälter 61 gegenüber dem Druck in dem Raum 22 realisiert werden. Voraussetzung ist, daß das Rückschlagventil 46 allein durch die Kraft auf den kleineren Kolben 76 nicht geöffnet werden kann. Da die Kraft auf den kleineren Kolben 76 der Kraft der Feder 48 entgegenwirkt, entsteht die gleiche Wirkung als wäre eine entsprechend schwächer dimensionierte oder eingestellte Feder 48 vorhanden. Der im Behälter 61 aufbaubare Druck ist zwar kleiner als der Druck im Raum 22, aber größer als der Druck im Behälter 61, der ohne die Anordnung des Kolbens 76 erzielbar wäre.

Wichtig ist es zu erkennen, daß die von der überfahrbaren Bohrung 69 ausgehende Steuerleitung 70 nicht durch die Magnetventile 53 der Steuereinheiten 4, 5, 6 und 7 geführt ist, sondern auf direktem Wege die Wirkfläche 77 des Kolbens 76 der Betätigungseinheiten 50 erreicht wird. So können die Steuereinheiten 4, 5, 6 und 7 der einzelnen Kreise unabhängig voneinander wahlweise über den elektropneumatischen Druckregler 2 (bei Spannungsversorgung) oder den mechanisch-pneumatischen Druckregler 3 (bei Unterbrechung der Spannungsversorgung und Aufhebung seiner Blockierung) angesteuert und damit die Leerlauf- und die Lastlaufphasen einschließlich der jeweiligen Regenerationsphasen geregelt werden. Auch die Schaltleitung 40 des mechanisch-pneumatischen Druckreglers 3 ist nicht über das Magnetventil 20 des elektropneumatischen Druckreglers 2 geführt, sondern erreicht unabhängig davon den Kolben 41. Die Rückströmleitung 42 führt über die Drossel 44 zum Lufttrockner 9. Zur Erreichung unterschiedlicher Vorratsdrücke in den Kreisen I, II, III und IV ist es erforderlich, die Federn 48 der betreffenden Rückschlagventile 46 entsprechend unterschiedlich einzustellen oder Kolben 76 mit unterschiedlich großen Wirkflächen 77 in den einzelnen Kreisen einzubauen.

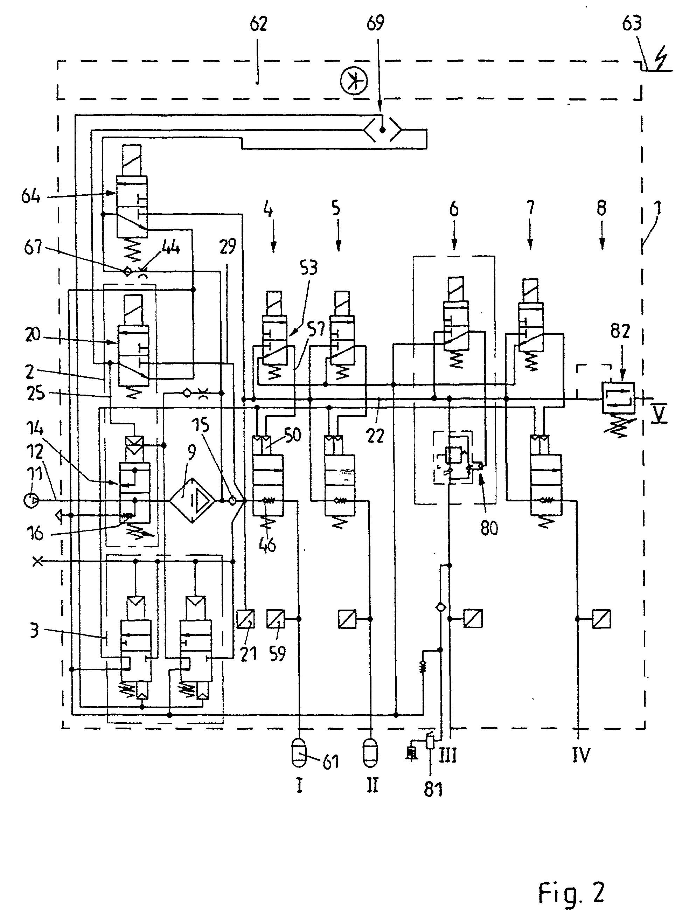

In Figur 2 ist ein schematisiertes Funktionsschaltbild der wesentlichen Elemente der Druckluftaufbereitungseinrichtung anhand von Sinnbildern verdeutlicht, die die Funktionen der Elemente erkennen lassen. Insoweit kann auf die Beschreibung der Figur 1 verwiesen werden. Die Druckluftaufbereitungseinrichtung ist als Baueinheit mit ihrem Gehäuse 1 dargestellt, in welchem sich die Elemente befinden. Die Druckluft wird vom Kompressor 11 über die Leitung 12 angeliefert und strömt bei geschlossenem Auslaßventil 14 zum Lufttrockner 9 sowie durch diesen hindurch über das Rückschlagventil 15 in Raum 22, von dem aus die einzelnen Steuereinheiten 4, 5, 6, 7 und 8 versorgt werden. Hierzu steht die Druckluft an den Magnetventilen 53 der einzelnen Steuereinheiten. Bei Erregung der Magnetventile 53 wird das jeweils zugehörige gesteuerte Rückschlagventil 46 aufgedrückt und die Druckluft gelangt aus dem Raum 22 in die zu dem Behälter 61 des Kreises I führende Leitung. Der Druck in dieser Leitung wird über den Drucksensor 59 überwacht. Entsprechendes gilt für die Kreise II, III, IV. Im Kreis III ist eine Besonderheit dargestellt. Es ist hier ein Druckbegrenzer 80 für die zu dem Anhänger führende Leitung sinnbildlich verdeutlicht, so daß in der zum Anhänger führenden Leitung ein Druck von z. B. 8,5 bar reduziert zur Verfügung gestellt werden kann. In einer abzweigenden Leitung ist ein Handbremsventil 81 für die Feststellbremse des Motorwagens angedeutet. Dem Kreis V ist ein Überströmventil 82 mit begrenzter Rückströmung zugeordnet, so daß hier z. B. ein Luftfederkreis versorgt werden kann. Der elektropneumatische Druckregler 2 setzt sich im wesentlichen aus dem Magnetventil 20 und dem Auslaßventil 14 zusammen, welches über die Ladung 25 angesteuert wird, wenn das Magnetventil 20 erregt ist.

Die doppelte Funktion des mechanisch-pneumatischen Druckreglers 3 ist durch zwei Schaubildelemente verdeutlicht. Das erste Element versinnbildlicht die erste Stufe, nämlich das Öffnen und Verbinden der Kreise, beispielsweise bei einem Druck von 8,5 bar. Die zweite Stufe dient der Darstellung der Regelung bei Spannungsunterbrechung. In diesem Zustand ist der mechanisch-pneumatische Druckregler 3 nicht blockiert und er bringt seine Schaltspanne zwischen beispielsweise 10 bis 12 bar. Ansonsten ist noch das Magnetventil 64 für die Regenerierung sowie das Zweiwegeventil 69 mit den jeweils zugehörigen Leitungsverbindungen dargestellt.

Figur 3 zeigt wiederum eine konstruktive weitere Ausführungsform der Druckluftaufbereitungseinrichtung, die aber zum großen Teil mit der Ausführungsform gemäß Figur 1 übereinstimmt, so daß hierauf verwiesen werden kann. Der mechanisch-pneumatische Druckregler 3 besitzt hier nur einen Blockierkolben 71 mit Blockierkammer 72, der das Zweiwegeventil 79 vorgeschaltet ist, um die Blockierung des Druckreglers 3 während der Lastlaufphase und der Regenerationsphase, ausgesteuert durch den elektropneumatischen Druckregler 2 zu gewährleisten. Die Betätigungseinheiten 50 der Steuereinheiten 4, 5 und 7 besitzen nur einen Kolben 51, der auf seiner einen Wirkfläche über das betreffende Magnetventil 53 ansteuerbar ist. Der Kolben 51 ist auf dieser Seite gehäuseseitig über eine Schließfeder 83 abgestützt, die dem Schließen eines Durchlaßventiles 84 dient, welches zwischen dem Stößel 52 und dem Ventilkörper 47 des gesteuerten Rückschlagventils 46 gebildet wird. Zur Bildung des Durchlaßventils ist der Ventilkörper 47 durchbrochen ausgebildet. Die Betätigungseinheiten 50 sind auf der anderen Seite des Kolbens 51 über den mechanisch-pneumatischen Druckregler 3 ansteuerbar, und zwar über die überfahrbare Bohrung 69 und die Steuerleitung 70. Bei Blockierung des Druckreglers 3 ist die Steuerleitung 70 über die Entlüftungsleitung 30 an die Atmosphäre angeschlossen. Sobald bei Spannungsunterbrechungen der Kolben 31 die Bohrung 69 überfährt, gelangt Druckluft aus der Kammer 39 in die Steuerleitung 70, so daß das Durchlaßventil 84 geöffnet wird und die Kreise in der Lastlaufphase aufgefüllt werden. Leerlaufphase wird bei fortgesetzter Bewegung des Kolbens 31 dadurch erreicht, daß der Kolben 31 gegen die Kraft der Feder 32 solange bewegt wird, bis der Doppelventilkörper 35 von dem als Ventilsitz dienenden Rand 36 abgehoben und über Leitung 40 das Auslaßventil 14 geöffnet und der Kompressor auf Leerlauf geschaltet wird. Dabei bleibt auch nach Erreichen des Einschaltdrucks des mechanisch-pneumatischen Druckreglers 3 die Leitung 70 belüftet und der Durchgang durch die geöffneten Rückschlagventile 46 zu den Kreisen I, II, IV und V gewährleistet.

Der dem Kreis III beispielhaft zugeordnete Druckbegrenzer 80 weist einen Druckbegrenzerkolben 85 auf, der mit seinem stangenartig ausgebildeten Stößel 52 als Stufenkolben ausgebildet ist. Der Ventilkörper 47 des gesteuerten Rückschlagventils 46 ist hier topfartig und durchbrochen ausgebildet. Der Stößel 52 besitzt einen Kanal 86, über den die betreffende Wirkfläche des Druckbegrenzerkolbens 85 mit dem Druck im Behälter 61 verbunden ist. Die übrige Ausbildung und der Anschluß des Druckbegrenzers 80 ist für den Fachmann aus der Zeichnung erkennbar. Mit dem Ventilkörper 47 wird ein Durchlaß/Sperrventil gebildet. Andererseits erfüllt der Ventilkörper 47 des Rückschlagventils 46 seine normale Rückschlagfunktion, indem er mit einem Rand und einem dort ausgebildeten gehäusefesten Sitz zusammenarbeitet.

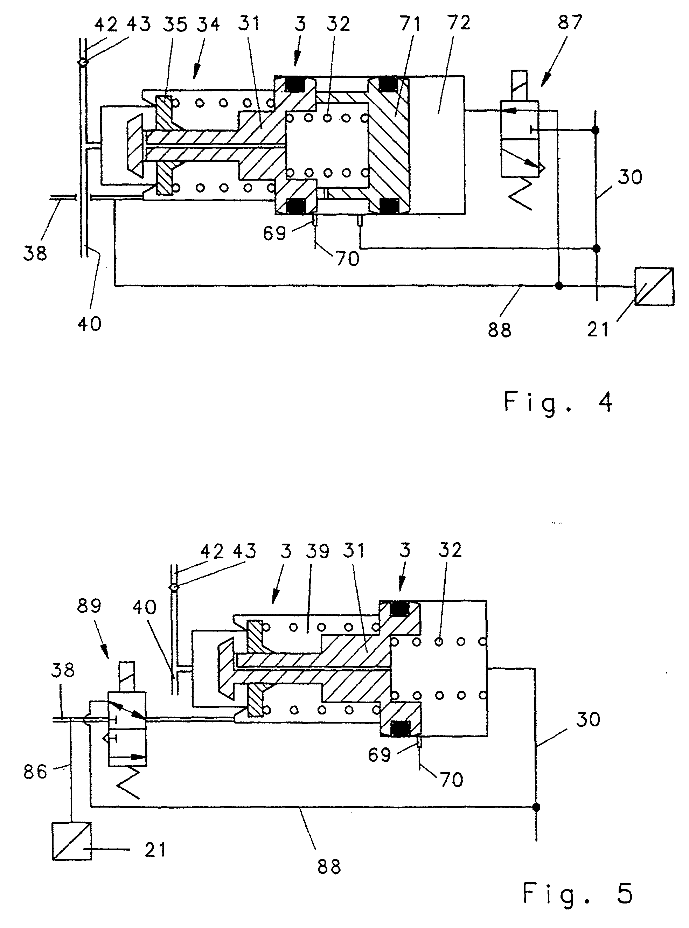

Figur 4 zeigt eine weitere Ausführungsform des mechanisch-pneumatischen Druckreglers 3 der Druckluftaufbereitungseinrichtung. Es ist hier nur ein Blockierkolben 71 mit einer Blockierkammer 72 vorgesehen. Ein gesondertes, als Magnetventil ausgebildetes Blockierventil 87 ist in eine Leitung 88 eingeschaltet, die von dem Raum 22 nach dem Rückschlagventil 15 bzw. von der damit verbundenden Leitung 38 zu der Blockierkammer 72 führt. Das gesonderte Blockierventil 87 ist so ausgebildet und geschaltet, daß es in erregtem Zustand, der nur bei ordnungsgemäßer Spannungsversorgung eintreten kann, die Blockierkammer 72 belüftet, so daß der Kolben 31 des mechanisch-pneumatischen Druckreglers 3 an einer Bewegung und damit der Druckregler 3 an der Ausübung einer Funktion gehindert ist. Wenn dagegen eine Spannungsunterbrechung stattfindet, geht auch das gesonderte Blockierventil 87 in seine Entlüftungsstellung, d. h. die Blockierkammer 72 wird über die Entlüfungsleitung 30 entlüftet, so daß damit der Kolben 31 entlastet wird und der mechanisch-pneumatische Druckregler 3 seine Funktion ausführen kann.

Figur 5 zeigt ein weiteres gesondertes Blockierventil 89, welches ebenfalls als Magnetventil ausgebildet ist und die beiden dargestellten Stellungen aufweist. Dieses Blockierventil 89 ist jedoch in der Leitung 38 angeordnet, die vom Raum 22 nach dem Rückschlagventil 15 zu der Kammer 39 des Kolbens 31 führt. In diesem Fall genügt es, die Feder 32 des Kolbens 31 gehäuseseitig abzustützen. Das Blockierventil 89 ist gleichsam umgekehrt beziehungsweise gegensätzlich ausgebildet und geschaltet wie das Blockierventil 87 der Figur 4. Seine Funktion und Arbeitsweise ist damit erkennbar.

Figur 6 zeigt eine besondere Ausfürungsform der Steuereinheit 4 aus gesteuertem Rückschlagventil 46, Durchlaßventil 84 und Betätigungseinheit 50. Wenn die Blockierung des mechanisch-pneumatischen Druckreglers 3 aufgehoben wird, kann sich der Kolben 31 nach rechts gegen die Kraft der Feder 32 bewegen. Die Bohrung 69 wird überfahren und über die Steuerleitung 70 wird der Kolben 51 der Betätigungseinheit 50 belüftet. Der Kolben 51 bewegt sich nach rechts entgegen der Kraft einer Schließfeder 83 bzw. 90. Damit öffnet das Durchlaßventil 84. Der Durchgang von Raum 22 zu den Kreisen wird ermöglicht. Bei der Ausführungsform der Fig. 6 ist auf der von der Steuerleitung 70 abgekehrten Seite des Kolbens 51 ein der Druckentlastung dienender Fortsatz 91 des Kolbens 51 in einer Hülse 92 dichtend gelagert und über eine Bohrung 93 ständig mit dem Druck in dem Behälter 61 verbunden, so daß die Schließfeder 90 mit geringerer Kraft als die Schließfeder 83 ausgeführt ist. Unterschreitet die durch den Druck in der Kammer 39 auf den Kolben 31 einwirkende Kraft die Kraft der Feder 32, wird der Kolben 31 nach links in Richtung auf den Rand 36 bewegt. Seine Dichtung 68 überfährt die Bohrung 69 rückwärts. Die Steuerleitung 70 wird an die Entlüftungsleitung angeschlossen und der Raum an dem Kolben 51 wird entlüftet. Die Schließfeder 83 bzw. 90 schließt das Durchlaßventil 84 an dem gesteuerten Rückschlagventil 46. Das Rückschlagventil 46 selbst ist geschlosssen, da die Kraft der Feder 48 größer ist als die Kraft der Schließfeder 83 bzw. 90.

In Figur 7 ist eine konstruktive Ausbildung des mechanisch-pneumatischen Druckreglers 3 dargestellt, dessen Abschaltdruck einstellbar ist. Zu diesem Zweck ist die den Kolben 31 belastende Feder 32 mit ihrem anderen Ende auf einer Stellschraube 94 gelagert, die den Blockierkolben 71 abgedichted durchsetzt. Es ist auch hier nur ein Blockierkolben 71 angeordnet, dessen Blockierkammer 72 das Zweiwegeventil 79 vorgeschaltet ist. Die Dichtung 68 ist hier als Lippe ausgebildet. Wenn der elektropneumatische Druckregler 3 blockiert wird, also die Blockierkammer 72 belüftet ist, liegt der Blockierkolben 71 an dem Kolben 31 an, der sich mit seiner Schaltstange 33 gehäuseseitig abstützt. Die Dichtung 68 hat die Bohrung 69 noch nicht überfahren (wie dargestellt). Die Steuerleitung 70 ist noch mit der Entlüftungsleitung 30 verbunden. Wenn dagegen die Blockierung des elektropneumatischen Druckreglers 3 aufgehoben wird, ist der in der Kammer 39 über die Leitung 38 von dem Raum 22 herangeführte Druck in der Lage, den Kolben 31 nach rechts zu verschieben, so daß die Dichtung 68 die Bohrung 69 überfährt (Stellung b) und der Druck aus dem Raum 22 damit gleichzeitig in der Steuerleitung 70 ansteht. Je nach der Ausbildung in Verbindung mit dem gesteuerten Rückschlagventil 46 wird sich also dort eine Öffnung, eine Druckentlastung oder ein Durchgang ausbilden. Zu diesem Moment hat der mechanisch pneumatische Druckregler 3 die Lastlaufphase. Bei fortgesetzter Lastlaufphase wird sich der Druck in der Kammer 39 noch weiter erhöhen, so daß der Kolben 31 die Stellung c überfährt und die Stellung d einnimmt, die dem Abschaltdruck entspricht. Der Druckregler 3 schaltet dann in die Leerlaufphase um, in dem die Kammer 39 mit der Schaltleitung 40 verbunden wird, die zum Auslaßventil 14 führt. Außerdem wird die Regenerationsphase eingeschaltet. Durch Druckluftverbrauch in den einzelnen Kreisen sinken die Drücke in den Behältern 61 und damit auch im Raum 22 und in der Kammer 39, so daß der Kolben 31 in die Stellung c zurückfährt. Dies entspricht dem Umschaltpunkt von der Leerlaufphase in die Lastlaufphase. Der Kolben 31 bewegt sich also beim Umschalten zwischen Lastlaufphase und Leerlaufphase immer nur zwischen den Stellungen c und d. Bei einer Erstbefüllung oder unmittelbar nach dem Aufheben der Blockierung des Kolbens 31 werden jedoch die Stellungen b und c überfahren, je nach dem in dem System gerade herrschenden Druck.

Tritt neben dem ersten "Fehler" (Spannungsunterbrechung) gleichzeitig ein zweiter Fehler (Leck in einem der Kreise) auf, dann fließt Druckluft aus den in Verbindung stehenden Kreisen über das Leck ab. Der Druck im Raum 22 und damit in der Kammer 39 fällt. Die Stellung b wird rückwärts durchfahren und die Steuerleitung 70 wird über die Entlüftungsleitung 30 entlüftet. Die Durchlaßventile 84 schließen und die Rückschlagventile 46 lassen ein Nachfüllen der intakten Kreise auf einem reduzierten Druckniveau zu. Ein Notbetrieb des Fahrzeuges ist also auch in diesem Fall möglich.

### BEZUGSZEICHENLISTE

- 1 -: Gehäuse
- 2 -: elektropn. Druckregler
- 3 -: mech.-pneum. Druckregler
- 4 -: Steuereinheit
- 5 -: Steuereinheit
- 6 -: Steuereinheit
- 7 -: Steuereinheit
- 8 -: Steuereinheit
- 9 -: Lufttrockner
- 10 -: Eingangsanschluß

- 11 -: Kompressor
- 12 -: Leitung
- 13 -: Durchtrittsraum
- 14 -: Auslaßventil
- 15 -: Rückschlagventil
- 16 -: Ventilkörper
- 17 -: Feder
- 18 -: Gehäuserand
- 19 -: Einrichtung
- 20 -: Magnetventil

- 21 -: Drucksensor
- 22 -: Raum
- 23 -: Kolben
- 24 -: Stößel
- 25 -: Leitung
- 26 -: Ventilmagnet
- 27 -: Einlaßsitz
- 28 -: Auslaßsitz
- 29 -: Leitung
- 30 -: Entlüftungsleitung

- 31 -: Kolben
- 32 -: Feder
- 33 -: Schaltstange
- 34 -: Durchlaßventil
- 35 -: Doppelventilkörper
- 36 -: Rand
- 37 -: Federraum
- 38 -: Leitung
- 39 -: Kammer
- 40 -: Schaltleitung

- 41 -: Kolben
- 42 -: Rückströmleitung
- 43 -: Rückschlagventil
- 44 -: Drossel
- 45 -: Mehrkreisschutzventil
- 46 -: Rückschlagventil
- 47 -: Ventilkörper
- 48 -: Feder
- 49 -: Gehäuserand
- 50 -: Betätigungseinheit

- 51 -: Kolben
- 52 -: Stößel
- 53 -: Magnetventil
- 54 -: Ventilmagnet
- 55 -: Einlaßsitz
- 56 -: Auslaßsitz
- 57 -: Leitung
- 58 -: Wirkfläche
- 59 -: Drucksensor
- 60 -: Leitung

- 61 -: Behälter
- 62 -: Steuer- und Überwachungseinr.
- 63 -: elektrische Leitung
- 64 -: Magnetventil
- 65 -: Ventilmagnet
- 66 -: Rückströmleitung
- 67 -: Rückschlagventil
- 68 -: Dichtung
- 69 -: überfahrbare Bohrung
- 70 -: Steuerleitung

- 71 -: Blockierkolben
- 72 -: Blockierkammer
- 73 -: Blockierkolben
- 74 -: Blockierkammer
- 75 -: Leitung
- 76 -: Kolben
- 77 -: Wirkfläche
- 78 -: Leitung
- 79 -: Zweiwegeventil
- 80 -: Druckbegrenzer

- 81 -: Handbremsventil
- 82 -: Überstromventil
- 83 -: Schließfeder
- 84 -: Durchlaßventil
- 85 -: Druckbegrenzerkolben
- 86 -: Kanal
- 87 -: Blockierwentil
- 88 -: Leitung
- 89 -: Blockierventil
- 90 -: Schließfeder

- 91 -: Fortsatz
- 92 -: Hülse
- 93 -: Bohrung
- 94 -: Stellschraube

## Patentansprüche

1. Druckluftaufbereitungseinrichtung für Druckluftbeschaffungsanlagen von Kraftfahrzeugen, die eine Baueinheit aus einem elektropneumatischen Druckregler (2), einem integrierten mechanisch-pneumatischen Druckregler (3), einem integrierten elektropneumatisch ausgebildeten Mehrkreisschutzventil (45) und einem Lufttrockner (9) bildet, mit einem einen Eingangsanschluß (10) und einen Auslaß aufweisenden gemeinsamen Gehäuse (1), in dem ein Durchtrittsraum (13) für die herangeführte Druckluft vorgesehen ist, der über ein gesteuertes, als Sicherheitsventil ausgebildetes Auslaßventil (14) in dessen Offenstellung mit der Atmosphäre verbunden ist, mit einem dem Durchtrittsraum (13) nachgeschalteten Rückschlagventil (15), mit einer Einrichtung (19) zum abwechselnden Öffnen und Schließen des Auslaßventils (14), und mit mehreren gleichartigen den einzelnen Kreisen (I, II, III, etc.) zugeordneten Steuereinheiten (4, 5, 6, etc.), die je ein entgegen der Strömungsrichtung schließendes Rückschlagventil (46) und eine Betätigungseinheit (50) zum gesteuerten Öffnen des Rückschlagventils (46) aufweisen, **dadurch gekennzeichnet, daß** der Abschaltdruck des mechanisch-pneumatischen Druckreglers (3) gleich oder kleiner als der Abschaltdruck des elektropneumatischen Druckreglers (2) ist, daß der mechanisch-pneumatische Druckregler (3) bei intakt mit Spannung versorgter Druckluftaufbereitungseinrichtung in seiner Funktion blockiert ist, und daß die Steuereinheiten (4, 5, 6, etc.) für die einzelnen Kreise (I, II, III, etc.) auf direktem Wege wahlweise über den elektropneumatischen Druckregler (2) oder den mechanisch-pneumatischen Druckregler (3) ansteuerbar sind.

2. Druckluftaufbereitungseinrichtung nach Anspruch 1, **dadurch gekennzeichnet, daß** die den einzelnen Kreisen (I, II, III, etc.) zugeordneten Steuereinheiten (4, 5, 6, etc.) als Kolbeneinheiten mit Stößel (52) zum Öffnen oder Entlasten des jeweiligen Rückschlagventils (46) ausgebildet sind, daß die Kolbeneinheiten zwei voneinander getrennte Wirkflächen (58, 77) aufweisen, von denen die eine Wirkfläche (58) über den elektropneumatischen Druckregler (2) und die andere Wirkfläche (77) über den mechanisch-pneumatischen Druckregler (3) ansteuerbar ist.

3. Druckluftaufbereitungseinrichtung nach Anspruch 1 und 2, **dadurch gekennzeichnet, daß** die Kolbeneinheiten zwei Kolben (51, 76) aufweisen und beide Wirkflächen (58, 77) gleichsinnig auf die beiden Kolben (51, 76) verteilt angeordnet sind.

4. Druckluftaufbereitungseinrichtung nach Anspruch 1 und 2, **dadurch gekennzeichnet, daß** die Kolbeneinheiten einen Kolben (51) aufweisen, der auf der einen Seite die eine Wirkfläche und auf der anderen Seite die andere Wirkfläche aufweist, daß der Ventilkörper (47) des Rückschlagventils (46) durchbrochen ausgebildet ist und der Stößel (52) der Kolbeneinheit mit dem durchbrochenen Ventilkörper (47) des Rückschlagventils (46) ein Durchlaßventil (84) bildet, und daß die Kolbeneinheit eine Schließfeder (83, 90) zum Schließen des Durchlaßventils (84) aufweist (Fig. 3 und 6).

5. Druckluftaufbereitungseinrichtung nach Anspruch 4, **dadurch gekennzeichnet, daß** die Kolbeneinheit druckentlastet ausgebildet ist und der Kolben (51) auf der vom Stößel (52) abgekehrten Seite einen in einer Hülse (92) geführten Fortsatz (91) aufweist.

6. Druckluftaufbereitungseinrichtung nach Anspruch 3, **dadurch gekennzeichnet, daß** das gesteuerte Rückschlagventils (46) eine Feder (48) aufweist, die in ihrer Kraft einstellbar ist.

7. Druckluftaufbereitungseinrichtung nach Anspruch 1, **dadurch gekennzeichnet, daß** der mechanisch-pneumatischen Druckregler (3) einen Kolben (31) und eine Kammer (39) aufweist und daß der Kolben (31) entgegen dem in der Kammer (39) wirkenden Druck auf einer in einem Federraum (37) angeordneten Feder (32) abgestützt ist, deren anderes Ende auf einer gehäuseseitig abgestützten Stellschraube (94) aufgelagert ist.

8. Druckluftaufbereitungseinrichtung nach Anspruch 7, **dadurch gekennzeichnet, daß** der mechanisch-pneumatischen Druckregler (3) Blockierkolben (71, 73) aufweist und daß die Stellschraube (94) den oder die Blockierkolben (71, 73) abgedichtet durchsetzt.

9. Druckluftaufbereitungseinrichtung nach Anspruch 7 oder 8, **dadurch gekennzeichnet, daß** eine zu den Betätigungseinheiten (50) der Steuereinheiten (4, 5, 6, etc.) führende Steuerleitung (70) an den Federraum (37) des mechanisch-pneumatischen Druckreglers (3) über eine von einer Dichtung (68) des Kolbens (31) überfahrbare Bohrung (69) angeschlossen ist.

10. Druckluftaufbereitungseinrichtung nach Anspruch 9, **dadurch gekennzeichnet, daß** die überfahrbare Bohrung (69) an dem mechanisch-pneumatischen Druckregler (3) außerhalb des Hubes des Kolbens (31) zwischen Lastlauf und Leerlauf angeordnet ist.

## Claims

1. A compressed air control device for a source of compressed air on motor vehicles, forming a unit of an electro-pneumatic unloader (2), an integrated mechanical-pneumatic unloader (3), an el'ectro-pneumatic multi-circuit control valve (45) and an air-drier (9), comprising:
an inlet (10) and an outlet provided in a common housing (1) in which a chamber (13) for the passage of compressed air is provided, the chamber being connected to the atmosphere via a controlled outlet valve (14) in form of a safety valve in its opened position,
a check valve (15) being positioned downstream of the chamber (13),
a means (19) for alternatingly opening and closing the outlet valve (14) and
a plurality of control units (4, 5, 6, etc.) of the same kind allocated to the respective circuits (I, II, III, etc.), the control units each comprising a check valve (46) closing contrary to the flow direction and a means (50) for controlled opening of the check valve (46), **wherein**
the mechanical-pneumatic unloader (3) is designed to have an switch-off pressure being equal or lower than the switch-off pressure of the electro-pneumatic unloader (2), the function of the mechanical-pneumatic unloader (3) being locked in case of the source of compressed air being correctly supplied with power, and wherein the control units (4, 5, 6, etc.) allocated to the respective circuits (I, II, III, etc.) are directly controlled by the electro-pneumatic unloader (2) or the mechanical-pneumatic unloader (3).

2. The compressed air control device of claim 1, wherein the control units (4, 5, 6, etc.) allocated to the respective circuits (I, II, III, etc.) are designed as piston units having rods (52) to open or relieve the check valve (46) concerned, **wherein** each control unit comprises two separate effective areas (58, 77), the one (58) of which is actuated by the the electro-pneumatic unloader (2) and the other (77) is actuated by the mechanical-pneumatic unloader (3).

3. The compressed air control device of claim 1 and 2, **wherein** the piston units comprise two pistons (51, 76), the effective areas (58, 77) of which are arranged in the same direction on the two pistons (51, 76).

4. The compressed air control device of claim 1 and 2, **wherein** each piston unit comprises a piston (51) having an effective area on its one side and another effective area on its other side, wherein the valve body (47) of the check valve (46) is designed to be hollow and the rod (52) of the piston unit and the hollow valve body (47) of the check valve (46) form an inlet valve (84), and wherein the piston unit shows a spring (83, 90) to close the inlet valve (84) (Fig. 3 and 6).

5. The compressed air control device of claim 4, **wherein** the piston unit is designed to be relieved from pressure and wherein the piston (51) has a prolongation (91) being positioned on the side of the piston opposite to the rod and being guided in a sleeve (92).

6. The compressed air control device of claim 3, **wherein** the controlled check valve (46) comprises a spring (48) the force of which being adjustable.

7. The compressed air control device of claim 1, **wherein** the mechanical-pneumatic unloader (3) comprises a piston (31) and a chamber (39), the piston (31) being supported on a spring (32) arranged in a spring chamber (37) and on the other side being biased by the pressure in the chamber (39), the other end of the spring being located on an adjustment screw (94) being supported on the housing.

8. The compressed air control device of claim 7, **wherein** the mechanical-pneumatic unloader (3) comprises locking pistons (71, 73) and wherein the adjustment screw (94) sealingly penetrates the locking piston.

9. The compressed air control device of claim 7 or 8, **wherein** a control line (70) to the actuation means (50) of the control units (4, 5, 6, etc.) is connected with the spring chamber (37) of the mechanical-pneumatic unloader (3) via a bore (69) being arranged crossable by a sealing (68) of the piston (31).

10. The compressed air control device of claim 9, **wherein** the crossable arranged bore (69) of the mechanical-pneumatic unloader (3) is positioned outside the stroke of the piston (31) between loading and unloading run.

## Revendications

1. Dispositif de traitement d'air comprimé pour installations d'air comprimé de véhicules automobiles, qui forme un ensemble constitué d'un régulateur de pression électropneumatique (2), d'un régulateur de pression mécanique et pneumatique (3) intégré, d'une soupape multicircuit (45) intégrée de conception électropneumatique et d'un séchoir à air (9), comportant un raccord d'entrée (10) et un boîtier (1) commun présentant une sortie, dans lequel il est prévu pour l'air comprimé arrivant, une chambre de passage (13) qui est reliée à l'atmosphère en position ouverte d'une soupape d'échappement (14) commandée, conçue en tant que soupape de sûreté, comportant un clapet de non-retour (15) en aval de la chambre de passage (13), comportant un dispositif (19) pour l'ouverture et la fermeture alternées de la soupape d'échappement (14), et comportant plusieurs unités de commande (4, 5, 6, etc.) de même type, affectées aux différents circuits (I, II, III, etc.), lesquelles comportent chacune un clapet de non-retour (46) qui se ferme dans le sens opposé au sens d'écoulement et une unité d'actionnement (50) pour l'ouverture commandée du clapet de non-retour (46), **caractérisé en ce que** la pression de coupure du régulateur de pression mécanique et pneumatique (3) est égale ou inférieure à la pression de coupure du régulateur de pression électropneumatique (2), **en ce que** le fonctionnement du régulateur de pression mécanique et pneumatique (3) est bloqué lorsque le dispositif de traitement d'air comprimé est correctement alimenté en tension, et **en ce que** les unités de commande (4, 5, 6, etc.) pour les différents circuits (I, II, III, etc.) peuvent être commandées, par voie directe, au choix par le régulateur de pression électropneumatique (2) ou par le régulateur de pression mécanique et pneumatique (3).

2. Dispositif de traitement d'air comprimé selon la revendication 1, **caractérisé en ce que** les unités de commande (4, 5, 6, etc.) affectées aux différents circuits (I, II, III, etc.) sont réalisées en tant qu'unités à pistons avec poussoir (52) pour l'ouverture ou la décharge du clapet de non-retour (46) respectif, **en ce que** les unités à pistons comportent deux surfaces actives (58, 77) séparées l'une de l'autre dont une surface active (58) peut être commandée par le régulateur de pression électropneumatique (2), et l'autre surface active (77) par le régulateur de pression mécanique et pneumatique (3).

3. Dispositif de traitement d'air comprimé selon les revendications 1 et 2, **caractérisé en ce que** les unités à pistons comportent deux pistons (51, 76), et **en ce que** les deux surfaces actives (58, 77) sont réparties dans le même sens sur les deux pistons (51, 76).

4. Dispositif de traitement d'air comprimé selon les revendications 1 et 2, **caractérisé en ce que** les unités à piston comportent un piston (51) qui présente une surface active sur un côté et l'autre surface active sur l'autre côté, **en ce que** le corps de soupape (47) du clapet de non-retour (46) est ajouré et le poussoir (52) de l'unité à piston forme une soupape de passage (84) avec le corps de soupape (47) ajouré du clapet de non-retour (46), et **en ce que** l'unité à piston comporte un ressort de fermeture (83, 90) pour la fermeture de la soupape de passage (84) (fig. 3 et 6).

5. Dispositif de traitement d'air comprimé selon la revendication 4, **caractérisé en ce que** l'unité à piston est détendue et le piston (51) présente, sur le côté opposé au poussoir (52), un prolongement (91) guidé dans une douille (92).

6. Dispositif de traitement d'air comprimé selon la revendication 3, **caractérisé en ce que** le clapet de non-retour (46) commandé comporte un ressort (48) dont la force est réglable.

7. Dispositif de traitement d'air comprimé selon la revendication 1, **caractérisé en ce que** le régulateur de pression mécanique et pneumatique (3) comporte un piston (31) et une chambre (39), et **en ce que** le piston (31) prend appui, à l'encontre de la pression agissant dans la chambre (39), sur un ressort (32) qui est disposé dans une chambre de ressort (37) et dont l'autre extrémité repose sur une vis de réglage (94) soutenue côté boîtier.

8. Dispositif de traitement d'air comprimé selon la revendication 7, **caractérisé en ce que** le régulateur de pression mécanique et pneumatique (3) comporte des pistons de blocage (71, 73), et **en ce que** la vis de réglage (94) traverse de manière étanche le ou les pistons de blocage (71, 73).

9. Dispositif de traitement d'air comprimé selon la revendication 7 ou 8, **caractérisé en ce qu'**une conduite de commande (70), qui mène aux unités d'actionnement (50) des unités de commande (4, 5, 6, etc.), est raccordée à la chambre de ressort (37) du régulateur de pression mécanique et pneumatique (3), par un perçage (69) sur lequel peut passer une garniture d'étanchéité (68) du piston (31).

10. Dispositif de traitement d'air comprimé selon la revendication 9, **caractérisé en ce que** le perçage (69) qui peut être franchi, est disposé sur le régulateur de pression mécanique et pneumatique (3), à l'extérieur de la course du piston (31), entre la course sous charge et la course à vide.
